(19) Europäisches Patentamt
European Patent Office
Office européen des brevets

(11) EP 1 945 439 B1

(12) **EUROPEAN PATENT SPECIFICATION**

(45) Date of publication and mention of the grant of the patent:
**11.07.2012 Bulletin 2012/28**

(21) Application number: **06765256.0**

(22) Date of filing: **14.08.2006**

(51) Int Cl.:
***B29C 63/46*** *(2006.01)* ***C08G 65/40*** *(2006.01)*

(86) International application number:
**PCT/GB2006/003002**

(87) International publication number:
**WO 2007/023253 (01.03.2007 Gazette 2007/09)**

(54) **POLYETHER AND ITS USE FOR LINING**

POLYETHER UND SEINE VERWENDUNG FÜR AUSKLEIDUNGEN

POLYETHER ET SON UTILISATION POUR UN REVETEMENT

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL**

(30) Priority: **26.08.2005 GB 0517385**

(43) Date of publication of application:
**23.07.2008 Bulletin 2008/30**

(73) Proprietor: **VICTREX MANUFACTURING LIMITED**
**Thornton Cleveleys**
**Lancashire FY5 4QD (GB)**

(72) Inventors:
- **LEIBFRIED, Richard, Thomas**
  **Chester Springs, PA (US)**
- **SMALL, Geoff**
  **Surrey KT23 4HQ (GB)**
- **WOOD, Alan**
  **Cumbria CA10 1TW (GB)**

(74) Representative: **Brierley, Anthony Paul et al**
**Appleyard Lees**
**15 Clare Road**
**Halifax**
**HX1 2HY (GB)**

(56) References cited:
**EP-A2- 0 266 951** **EP-A2- 0 373 633**
**WO-A-90/02904**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 945 439 B1

## Description

This invention relates to polymeric materials and particularly, although not exclusively, relates to components which comprise a polymeric material and are adapted to be fitted within a receiver. Preferred embodiments relate to swaging a component so that it may be fitted within a receiver and subsequently causing the swaged component to expand so it is urged against parts of the receiver.

GB807413 (Tubovit) discloses a process for lining metal pipes with polyvinyl chloride resin (PVC) or other vinyl resins. The process involves first heating a PVC liner to a temperature between its Vicat softening point (about 90°C) and 140°C or higher, mechanically deforming the liner and introducing it at the aforementioned elevated temperature into the metal pipe. This causes spontaneous cooling of the liner. Thereafter, the pipe and liner are again heated to a temperature which may be at or near the temperature of said first heating, which causes the liner and metal to adhere to one another.

A problem with the aforementioned is the risk that a swaged or reduced diameter component for example liner rebounds to at or close to its original diameter before it can be fitted into a receiver, for example metal pipe. Another problem is the need to carefully control heating regimes which may need to be adopted to form the reduced diameter component in the first instance and cooling regimes which may need to be adopted to maintain the reduced diameter component in its reduced state until it has been introduced into a receiver.

It is one object of the present invention to address the above described problems.

It is another object of the invention to address the problem of fitting components into receivers.

Subject-matter of the present invention are methods according to claims 1-16, and products according to claims 17-19.

According to a first aspect of the invention, there is provided a method of fitting a compressed component in a receiver, the method comprising:

(a*) selecting a compressed component which comprises a polymeric material wherein said polymeric material comprises a first polymer having a glass transition temperature (Tg) of at least 100°C;

(b) arranging the compressed component in position within the receiver;

(c) subjecting the compressed component to conditions whereby the compressed component expands. Said first polymer is a polymer according to claim 1.

The invention extends to a method of fitting a selected component within a receiver, wherein said selected component comprises a polymeric material and said polymeric material comprises a first polymer having a glass transition temperature (Tg) of at least 100°C, said method comprising:

(a) compressing the selected component thereby to produce a compressed component;
(b) arranging the compressed component in position within the receiver;
(c) subjecting the compressed component to conditions whereby the compressed component expands. Said first polymers is a polymer according to claim 1.

Glass transition temperature may be measured as described in "Procedure 1" hereinafter.

Advantageously, the method may enable a said compressed component to be made from a selected component at a relatively low temperature, for example at ambient temperature, so no separate heating of the selected component may be required to enable it to be compressed. After compression, the compressed component may remain in such a state for a substantial period of time, for example substantially indefinitely, without the need for it to be cooled to less than ambient temperature or for a force to be applied to restrict its expansion. Accordingly, it is possible to delay the fitment of the compressed component in position within the receiver.

The selected component may be too large for it to be fitted in its intended position in the receiver. Hence the need to adjust its size.

Suitably, the receiver has an opening providing access to the intended position for the selected component in the receiver and the selected component may be too large for it to pass through said opening to said intended position.

Preferably, the selected component includes a void region, for example it may be hollow at least in part. Said selected component may be arranged such that when it is compressed to produce the compressed component, the process of compression causes a compressible region of the selected component to move into the void region.

The compressible region may comprise a wall at least a part of which may define an outer surface of the selected component. The wall may be arranged such that it contributes to a dimension of the selected component which restricts the selected component from being fitted in its intended position in the receiver. The wall may have a thickness

of at least 0.25cm, preferably at least 0.5cm. The thickness of the wall may be selected in dependence upon a diameter of the selected component, with selected components having larger diameters having thicker wall. The wall may have a thickness of less than 2cm, preferably less than 1.5cm. The wall may have a thickness as described over an area of at least 50%, preferably at least 75%, more preferably at least 90% of the surface area of at least an outer wall of the selected component.

A force may be applied to the wall to cause said outer surface to move through a distance of at least 1mm preferably at least 5mm, especially at least 1cm.

Preferably, in the method, force arranged to compress the selected component is applied substantially symmetrically to the selected component - that is, each individual externally applied force in one direction is substantially balanced by an equal force applied externally in an opposite direction.

Preferably, said selected component is substantially symmetrical about a first plane and a second plane wherein said first and second planes are at right angles to one another. The selected component may also be symmetrical about a third plane, wherein said first, second and third planes are mutually orthogonal.

Said compressed component may be substantially symmetrically about a first plane and a second plane wherein said first and second planes are at right angles to one another. The compressed component may also be symmetrical about a third plane, wherein said first, second and third planes are mutually orthogonal.

Where the selected component is symmetrical about first and second planes, said compressed component is preferably symmetrically about the same first and second planes. Where said selected component is symmetrical about a third place, said compressed component is preferably symmetrical about the same third plane.

Said method preferably comprises fitting said compressed component between first and second positions of the receiver wherein the distance between the first and second positions is less than the distance between first and second surfaces (e.g. outer surfaces) of the selected component (i.e. before compression) which are in step (b) of the method arranged adjacent to (preferably to abut) said first and second positions of said receiver.

Said method preferably comprises selecting a said selected component and compressing it in step (a) of the method so that the distance between said first and second surfaces (e.g. outer surfaces) is reduced.

Said first and second surfaces are preferably on opposite sides of said selected component, for example on opposite sides of a plane of symmetry of the selected component.

Said first surface of the selected component is preferably part of a compressible region as aforesaid. Preferably, both of said first and second surfaces are parts of compressible regions (suitably different compressible regions) as aforesaid.

Said selected component preferably comprises a pipe. Said pipe preferably has an outside diameter of at least 2.5 cm, more preferably at least 4cm, especially at least 5cm. The outside diameter is preferably less than 30cm, more preferably less than 25cm. In for example a chemical plant, pipe of diameter about 10cm (4 inches) may be used; for gas pipes, the diameter may be greater than 20cm (8 inches).

The ratio of the wall thickness to diameter ratio of a pipe selected for compression may be less than 0.06, preferably less than 0.05, more preferably less than 0.04. The ratio may be at least 0.01, suitably at least 0.02, preferably at least 0.025.

Said pipe preferably has a substantially circular internal cross-section.

The cross-section of the wall of the pipe is preferably substantially annular.

The pipe preferably include a substantially smooth outer surface; preferably along substantially its entire extent. Preferably, substantially all points on an outwardly facing circumferential surface of the pipe are substantially equidistantly spaced from the centre about which the circumferential surface is defined.

The outside diameter of the pipe is preferably substantially constant for substantially all points on the outside of the pipe. Preferably, the outside diameter is substantially constant along substantially the entire extent of the pipe.

Said selected component, for example said pipe, may have a length (or maximum dimension) of at least 1m, suitably at least 5m, preferably at least 10m, more preferably at least 50m, especially at least 100m. In some cases, the component may be even longer, for example 200m or greater.

In the method, wherein the selected component is a pipe, the outside diameter of the pipe may be reduced by 5-15%, for example 10-15%, in step (a). Thus, the ratio of the outside diameter of said selected component (e.g. pipe) to that of said compressed component (e.g. compressed pipe) may be at least 1.05, preferably at least 1.1. The ratio may be less than 0.3, preferably less than 0.25, more preferably less than 0.2.

In the method, with said selected component at a temperature which may be at least 20°C less than the Tg of said first polymer, the temperatures suitably being less than 100°C, preferably less than 80°C, more preferably less than 50°C, especially less than 35°C, said selected component may be subjected to, for example contacted with, a compression means to compress the component and produce said compressed component. Preferably, said selected component is initially contacted with a said compression means when said selected component is at a temperature of less than 80°C, preferably less than 50°C, more preferably less than 35°C. Suitably, the temperature of said selected component when it is subjected to, for example initially contacted with, said compression means is less than 80°C, preferably less than

50°C, more preferably less than 35°C. Said temperature may be greater than 0°C, preferably greater than 10°C, more preferably greater than 15°C. Advantageously, the selected component may be at ambient temperature when it is subjected to and/or initially contacted with said compression means and suitably therefore no heat from any external heat source need be supplied.

The temperature of the selected component may rise as mechanical work is done on it during compression. Preferably, the temperature does not rise to within 20°C, preferably does not rise to within 40°C, of the Tg of said first polymer.

After removal of a force used to compress the selected component, the compressed component may advantageously not need to be subjected to active cooling; it may simply be subjected to ambient temperature.

Suitably, after compression in step (a) and prior to step (b) of the method, said compressed component is subjected to (and may be held at) a temperature (hereinafter referred to as "said post-compression temperature") of less than 50°C, preferably less than 40°C, more preferably less than 35°C. The post-compression temperature may be greater than 0°C, preferably greater than 10°C, more preferably greater than 15°C. Advantageously, the post-compression temperature may be ambient temperature. The selected component may be maintained at said post-compression temperature for at least 5 minutes, preferably at least 30 minutes, more preferably at least 1 hour. Said selected component may be maintained at said post-compression temperature for more than 13 hours. It has been found, advantageously, that the compressed component may be maintained at said post-compression temperature for one or more days or longer (even weeks or substantially indefinitely) and this may allow selected components to be compressed to produce compressed components which may even be stored before being used in step (b) of the method. Compressed components could be produced at a factory and transported to a location wherein they may be used.

The time between the end of step (a) and the end of step (b) (i.e. the time at which the compressed component is in its intended position) may be at least 15 minutes, 30 minutes, 1 hour, 2 hours, 5 hours or more. In some cases, for example where the compressed component is stored prior to use in step (b) it may be more than 12, 24, 36 or 48 hours.

Advantageously, said compressed component may be maintained in its compressed state under the temperature conditions and/or for the time as aforesaid due to intrinsic properties of said polymer.

Said selected component may be maintained substantially in its compressed state provided its temperature does not rise above a relevant glass transition temperature of said polymeric material, for example the glass transition temperature of said first polymer in said polymeric material. Thus, the method preferably includes the step, between steps (a) and (b), of maintaining the temperature of the compressed component below the Tg of the first polymer in said polymeric material.

Thus, suitably, one or a plurality of properties inherent in said compressed component is sufficient, whilst said component is below the Tg of said first polymer, to maintain the compressed component in its compressed state. Preferably, after the end of step (a) and before step (b) (i.e. suitably after removal of said compression means when provided) the compressed component is maintained in its compressed state by one or a plurality of properties inherent in said compressed component. Preferably, between steps (a) and (b), no outside force (e.g. no physical force such as a tension or compression force applied by a force applying means) is applied to said compressed component to restrict it from expanding, for example to restrict it from reverting to (or moving towards) the form and/or size of said selected component.

When the selected component is a pipe as described above, said pipe selected may be swaged in step (a) of the method thereby to produce a compressed pipe (which may be selected in step (a*)). This may include a step of forcing the pipe selected (suitably, a circular cross-section pipe) through an opening, suitably a circular opening, which has a diameter which is less than the outside diameter of the pipe. A mouth of the opening which defines an inlet of the opening preferably tapers inwardly to facilitate location and passage of the pipe through the opening. The pipe is suitably compressed as it is forced through the opening. Preferably, the step of forcing the pipe through the opening includes the application of a force to the pipe in the direction of the longitudinal axis of the pipe. The pipe may be pushed or pulled through the opening to apply said force or a combination of pushing and pulling may be used. Upstream of the opening the pipe may be supported on a carrier, for example a spool (or the like) and unwound from the spool for passage through the opening. A length of pipe of at least 5m, preferably at least 10m, more preferably at least 25m, more preferably at least 50m, especially at least 100m may be swaged in step (a). Downstream of the opening, the compressed or swaged pipe may be supported on a carrier, for example wound round a spool (or the like).

In step (b), the compressed component may be manipulated to engage the receiver and be arranged in position within the receiver. Suitably, when the receiver has an opening as aforesaid for providing access to the intended position for the selected component, said compressed component is moved through said opening to said intended position. During step (b), preferably during the entirety of step (b), the temperature of the compressed component does not rise above the Tg of said first polymer. Thus, suitably, the compressed component may be positioned whilst it is in a fixed configuration and/or is not expanding and/or changing its size and/or shape.

In step (c), said compressed component preferably expands back towards the shape and/or size of said selected component. It preferably expands so that it fits tightly within the receiver.

In step (c), the conditions to which the compressed component may be subjected may be one or both of either an increase in temperature or application of pressure. Where temperature is increased, it may be increased by at least 10°C, at least 20°C, at least 30°C or at least 40°C. The temperature is suitably not increased to more than 50°C above the Tg of said first polymer. Where pressure is applied, at least 200psi, suitably at least 500psi, preferably at least 750psi may be used. The pressure used may be less than 5000psi, preferably less than 2500psi.

In general terms, the lower the temperature is relative to the Tg of the first polymer in step (c) the higher the pressure which may be required to cause appropriate expansion of the compressed component. If the temperature is raised to (or above) the Tg of the first polymer, there may be no need to apply pressure as aforesaid.

When the temperature is increased in step (c), a heating means is preferably provided for directing heat internally or externally to the component. Suitably, said heating means is arranged to direct heat to the compressed component from a position within the component, for example from a void in the component. When the component is a pipe, heating means may be arranged within the pipe to direct heat internally within the pipe. Suitably, heating means comprises a heated fluid.

Where the pressure is increased in step (c), a pressure applying means is preferably provided and suitably is arranged to direct pressure to the compressed component in an opposite direction to the direction the selected component was initially compressed. Said pressure applying means may apply pressure from a position within the component, for example from a void in the component. When the component is a pipe, pressure applying means may be arranged within the pipe to direct a pressure from a position within the pipe outwardly. Suitably, the pressure applying means comprises a fluid.

The same fluid may be used to apply both heat and pressure to the component, for example the pipe.

In general terms, in the case where the component has not been taken beyond its elastic limit (yield point) during step (a), heat alone may be sufficient to bring about expansion in step (c). In this case raising the component to a temperature at or close to the Tg of the first polymer would allow the elastic frozen-in residual stress to recover and the component to expand.

Where permanent deformation has occurred, that is the yield stress of the material has been exceeded during step (a) then the application of heat and pressure may be necessary to bring about the expansion of the component in step (c). The expansion will be based on any residual recoverable stress and generating a high enough stress in the material to ensure that it yields. The yield stress of a polymer will be a function of temperature, the yield stress generally reducing as the temperature is increased. Thus, the pressure required to achieve expansion will be a function of the temperature of the component and its environment.

When the compressed component is pipe having an annular cross-section, the required pressure to cause expansion in step (c) can be estimated from the following expression:

$$P = \frac{2SH}{D}$$

where:

P = estimated pressure to bring about expansion (Pa)
D = external diameter of the pipe (m)
H = wall thickness (m)
S = yield stress of the material at the temperature (Pa) at which the expansion is undertaken

Under these circumstances, any deformation resulting from the expansion and yielding will involve an element of recoverable elastic deformation. It will therefore, be necessary to maintain the pressure and temperature for a period following the expansion process in order to allow the decay of this recoverable elastic deformation in order to ensure that the component retains its expanded dimensions. The period of time that the pressure and temperature needs to be maintained will depend on the temperature of the component and its environment. The higher the temperature the shorter the period of time required. If the temperature of the first polymer is above the $T_g$, then the required time will be very much shorter than the time required if the material is below its $T_g$.

Thus, when the compressed component is a pipe, the pipe is preferably subjected to an internal pressure which is between 80% (preferably at least 90%, more preferably at least 95%, especially at least 100%) and 150% of the pressure estimated to be required using the equation.

$$P = \frac{2SH}{D}$$

where P, D, H and S are as described above. In general terms, the higher the pressure above that estimated to be required as described, the faster the rate of expansion.

After the compressed component has been subjected to said conditions in step (c), the compressed component may expand so that it is then too large for it to be removed from its intended position in the receiver. For example, when the receiver includes an opening for providing access to the intended position, after step (c), the component may be too large for it to be removed from the opening. When the method comprises fitting said compressed component between first and second positions of the receiver wherein the distance between the first and second positions is less than the distance between first and second surfaces of the selected component as described above, preferably in step (c), the distance between said first and second surfaces is increased so said surfaces move closer to (preferably to abut) said first and second positions of the receiver. The % expansion of the distance between said first and second surfaces in step (c) may be at least 5%, preferably at least 10%. The distance between said first and second surfaces after step (c) may be less than the distance between said surfaces in said selected component compressed in step (a). However it is possible for the distance to be greater - i.e. expansion so that the component after expansion in step (c) has a dimension which is greater than a corresponding dimension in the selected component.

When the compressed component is a pipe, the ratio of the outside diameter of the compressed pipe produced in step (a) to that of the expanded pipe produced in step (c) may be at least 0.8, preferably at least 0.85. The ratio may be less than 0.95.

When the compressed component is a pipe, the ratio of the outside diameter of the pipe selected before compression in step (a) to that of the expanded pipe produced in step (c) may be in the range 0.9 to 1.1, preferably in the range 0.9 to 1.

Said first polymer may have a Tg of at least 110°C, suitably at least 120°C, preferably at least 130°C, more preferably at least 140°C.

Said first polymer may have a Tg of less than 260°C, for example less than 220°C or less than 200°C. In some cases, the Tg may be less than 190°C, 180°C or 170°C.

The lowest Tg of any polymer in said polymeric material may be at least 100°C, suitably at least 110°C, preferably at least 120°C, more preferably at least 130°C, especially at least 140°C. The lowest Tg of any polymer in said polymeric material may be less than 220°C, suitably less than 200°C. It may be less than 190°C or less than 180°C.

Said first polymer suitably has a melt viscosity (MV) of at least 0.06 $kNsm^{-2}$ , preferably has a MV of at least 0.09 $kNsm^{-2}$, more preferably at least 0.12 $kNsm^{-2}$, especially at least 0.15 $kNsm^{-2}$.

MV is suitably measured using capillary rheometry operating at 400°C at a shear rate of $1000s^{-1}$ using a tungsten carbide die, 0.5x3.175mm.

Said first polymer may have a MV of less than 1.00 $kNsm^{-2}$, preferably less than 0.5 $kNsm^{-2}$.

Said first polymer may have a MV in the range 0.09 to 0.5 $kNsm^{-2}$, preferably in the range 0.14 to 0.5 $kNsm^{-2}$.

Said first polymer may have a tensile strength, measured in accordance with ASTM D790 of at least 40 MPa, preferably at least 60 MPa, more preferably at least 80 MPa. The tensile strength is preferably in the range 80-110 MPa, more preferably in the range 80-100 MPa.

Said first polymer may have a flexural strength, measured in accordance with ASTM D790 of at least 145 MPa. The flexural strength is preferably in the range 145-180 MPa, more preferably in the range 145-165 MPa.

Said first polymer may have a flexural modulus, measured in accordance with ASTM D790, of at least 2 GPa, preferably at least 3GPa, more preferably at least 3.5 GPa. The flexural modulus is preferably in the range 3.5-4.5 GPa, more preferably in the range 3.5-4.1 GPa.

Said polymeric material may have a tensile strength, measured in accordance with ASTM D790 of at least 20 MPa, preferably at least 60 MPa, more preferably at least 80 MPa. The tensile strength is preferably in the range 80-110 MPa, more preferably in the range 80-100 MPa.

Said polymeric material may have a flexural strength, measured in accordance with ASTM D790 of at least 50 MPa, preferably at least 100 MPa, more preferably at least 145 MPa. The flexural strength is preferably in the range 145-180MPa, more preferably in the range 145-164 MPa.

Said polymeric material may have a flexural modulus, measured in accordance with ASTM D790, of at least 1 GPa, suitably at least 2 GPa, preferably at least 3 GPa, more preferably at least 3.5 GPa. The flexural modulus is preferably in the range 3.5-4.5 GPa, more preferably in the range 3.5-4.1 GPa.

Said receiver preferably has a shape which corresponds in shape, at least in part, to that of the selected component which is to be fitted therewith. When said selected component comprises a pipe, the receiver may have the same cross-sectional shape as the pipe and preferably has a circular cross-section.

Said first polymer is a polymer according to claim 1. Said first polymer may be a homopolymer having a repeat unit of general formula

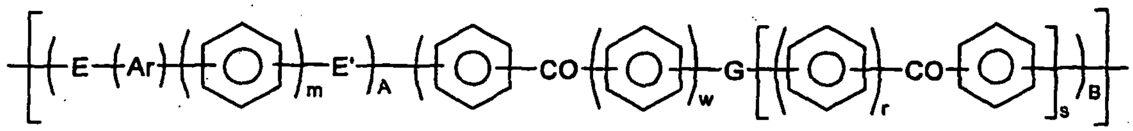

IV

or a homopolymer having a repeat unit of general formula

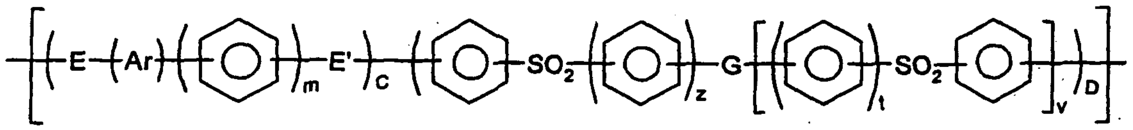

V

or a random or block copolymer of at least two different units of IV and/or V
wherein A, B, C and D independently represent 0 or 1 and E,E',G,Ar,m,r,s,t,v,w and z are as described in claim 1.

As an alternative to a first polymer comprising units IV and/or V discussed above, said first polymer may be a homopolymer having a repeat unit of general formula

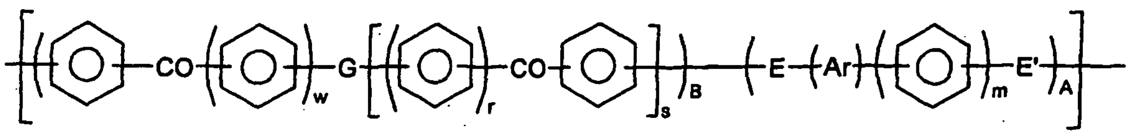

IV*

or a homopolymer having a repeat unit of general formula

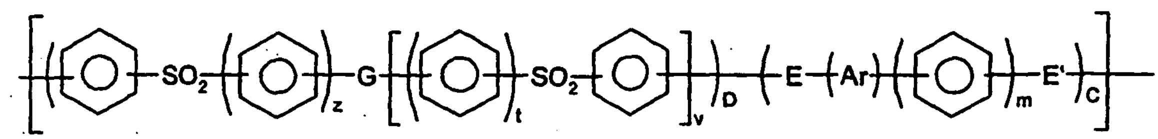

V*

or a random or block copolymer of at least two different units of IV* and/or V*, wherein A, B, C, and D independently represent 0 or 1 and E, E', G, Ar, m, r, s, t, v, w and z are as described in claim 1.

Preferably, m is in the range 0-3, more preferably 0-2, especially 0-1. Preferably, r is in the range 0-3, more preferably 0-2, especially 0-1. Preferably t is in the range 0-3, more preferably 0-2, especially 0-1. Preferably, s is 0 or 1. Preferably v is 0 or 1. Preferably, w is 0 or 1. Preferably z is 0 or 1.

Preferably, said first polymer is a homopolymer having a repeat unit of general formula IV.

Ar is selected from the following moieties (vii) to (xiii) and (xi)**

(xi)**

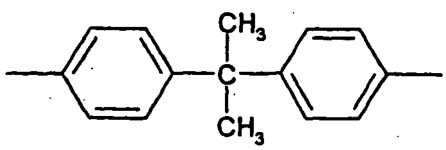

(vii)

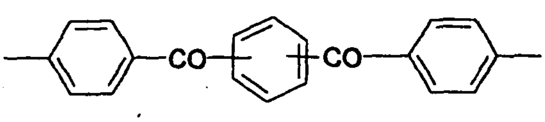

(viii)

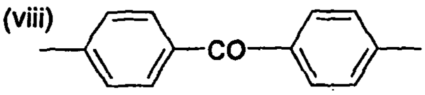

(ix) 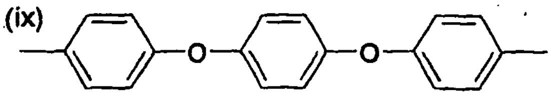 (x) 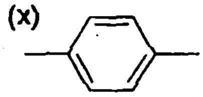

(xi) 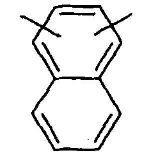 (xii) 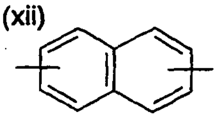

(xiii) 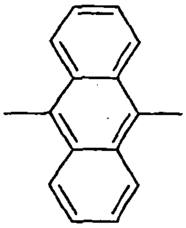

In (vii), the middle phenyl may be 1,4- or 1,3-substituted. It is preferably 1,4-substituted.

Preferably, (xi) is selected from a 1,2-, 1,3-, or a 1,5-moiety; and (xii) is selected from a 1,6-, 2,3-, 2,6- or a 2,7-moiety.

Preferred moieties Ar are moieties (vii), (viii), (ix) and (x) and, of these, moieties (vii), (viii) and (x) are especially preferred.

An especially preferred class of first polymers are polymers (or copolymers) which consist essentially of phenyl moieties in conjunction with ketone and/or ether moieties. That is, in the preferred class, the first polymer material does not include repeat units which include -S-, $-SO_2-$ or aromatic groups other than phenyl.

Said first polymer may be amorphous or semi-crystalline. Amorphous polymers may be used wherein, for example, the component is no subjected to a harsh chemical environment in use.

Said first polymer is preferably semi-crystalline. The level and extent of crystallinity in a polymer is preferably measured by wide angle X-ray diffraction (also referred to as Wide Angle X-ray Scattering or WAXS), for example as described by Blundell and Osborn (Polymer 24, 953, 1983). Alternatively, crystallinity may be assessed by Differential Scanning Calerimetry (DSC).

The level of crystallinity in said first polymer may be at least 1%, suitably at least 3%, preferably at least 5% and more preferably at least 10%. In especially preferred embodiments, the crystallinity may be greater than 30%, more preferably greater than 40%, especially greater than 45%.

The main peak of the melting endotherm (Tm) for said first polymer (if crystalline) may be at least 300°C.

Said first polymer preferably comprises, more preferably consists essentially of, a repeat unit of formula (XX)

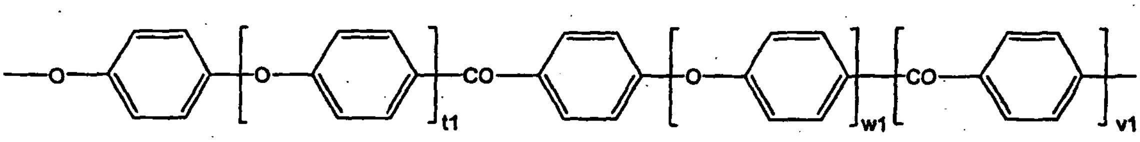

where t1, and w1 independently represent 0 or 1 and v1 represents 0, 1 or 2. Preferred polymeric materials have a said repeat unit wherein t1=1, v1=0 and w1=0; t1=0, v1=0 and w1=0; t1=0, w1=1, v1=2; or t1=0, v1=1 and w1=0. More preferred have t1=1, v1=0 and w1=0; or t1=0, v1=0 and w1=0. The most preferred has t1=1, v1=0 and w1=0.

In preferred embodiments, said first polymer is selected from polyetheretherketone, polyetherketone, polyetherketoneetherketoneketone and polyetherketoneketone. In a more preferred embodiment, said polymeric material is selected from polyetherketone and polyetheretherketone. In an especially preferred embodiment, said polymeric material is polyetheretherketone.

Said polymeric material may comprise a blend of polymers, the blend comprising said first polymer and a second polymer.

Said second polymer may have a Tg above or below that of the first polymer.

Said second polymer may have any feature of and be selected from any class or specific polymer described

above for the first polymer. Said second polymer is suitably chemically different compared to the first polymer.

Said second polymer may be selected so that properties of said polymeric material are different from those solely due to the presence of said first polymer in said polymeric material. For example, if said first polymer is blended with a second polymer such that the second polymer is dispersed as a separate phase in a continuous phase defined by said first polymer, then many properties (e.g. solvent resistance etc) of the first polymer will be substantially retained in the polymeric material. However, the presence of second polymer could affect other properties. For example, said second polymer could be a fluoropolymer (e.g. PTFE) dispersed within a matrix of the first polymer for example of PEEK. The fluoropolymer may reduce the coefficient of friction at a surface of the selected component (e.g. pipe) facilitating fitment in the receiver. However, the Tg of the material and the ability of the polymeric material to expand as described may be similar to that of the first polymer alone.

On the other hand, the second polymer could be used to increase the lowest Tg of the polymeric material over and above the Tg of the first polymer alone. By way of example a polyetherimide, such as ULTEM CRS5001 (Trade Mark) may be blended with polyetheretherketone (Tg=143°C) in a ratio of polyetherimide to polyetheretherketone of less than about 0.4 to produce an immiscible blend comprising the imide dispersed in a continuous phase defined by the polyetheretherketone. In this case, the blend has two Tg's with the lowest being well above 143°C.

Said second polymer may be selected because it is cheaper than the first polymer and so the polymeric material may be prepared more cheaply.

By way of example, the second polymer could be polyethersulphone having a Tg of about 220°C and the first polymer could again be polyetheretherketone (Tg=143°C). By forming an immiscible blend of polyethersulphone dispersed in a continuous phase of polyetheretherketone, with a ratio of sulphone to polyetheretherketone of less than about 0.4, polymeric material may be produced which has good chemical resistance and can be used in the method described herein and yet may be cheaper than a polymeric material consisting of polyetheretheketone alone. The Tg of the material would be about 143°C.

Examples of immiscible blends which may be of utility as described herein (including blends of three polymers) are described in WO2002/14404, EP211604, US4895913 and US4624997. Blends of three or more polymers may be used in some cases. In some cases miscible blends of polymers having a single Tg may be used as described in US5110880.

Said first polymer may make up at least 60wt%, suitably at least 70wt%, preferably at least 80wt%, more preferably at least 90wt%, especially at least 95wt%, of the total amount of thermoplastic polymer(s) in said polymeric material. Preferably, substantially the only thermoplastic polymer in said polymeric material is said first polymer.

When said polymeric material includes a second polymer, said polymeric material preferably includes less than 30wt%, preferably less than 25wt%, more preferably less than 20wt% of said second polymer.

Said polymeric material could include a filler means.

Said filler means may include a fibrous filler or a non-fibrous filler. Said filler means may include both a fibrous filler and a non-fibrous filler.

A said fibrous filler may be continuous or discontinuous. In preferred embodiments a said fibrous filler is discontinuous.

A said fibrous filler may be selected from inorganic fibrous materials, non-melting and high-melting organic fibrous materials, such as aramid fibres, and carbon fibre.

A said fibrous filler may be selected from glass fiber, carbon fibre, asbestos fiber, silica fiber, alumina fiber, zirconia fiber, boron nitride fiber, silicon nitride fiber, boron fiber, fluorocarbon resin fibre and potassium titanate fiber. Preferred fibrous fillers are glass fibre and carbon fibre.

A fibrous filler may comprise nanofibres.

A said non-fibrous filler may be selected from mica, silica, talc, alumina, kaolin, calcium sulfate, calcium carbonate, titanium oxide, ferrite, clay, glass powder, zinc oxide, nickel carbonate, iron oxide, quartz powder, magnesium carbonate, fluorocarbon resin, graphite, carbon powder, nanotubes and barium sulfate. The non-fibrous fillers may be introduced in the form of powder or flaky particles.

Preferably, said filler means comprises one or more fillers selected from glass fibre, carbon fibre, carbon black and a fluorocarbon resin. More preferably, said filler means comprises glass fibre or carbon, especially discontinuous, for example chopped, glass fibre or carbon fibre.

Suitably, the total amount of filler means in said polymeric material is less than 40%, preferably less than 30wt%. Preferably, said polymeric material includes substantially no filler means.

Said polymeric material may include:

(i) 70-100wt% of thermoplastic polymer(s); and
(ii) 0-40wt%, (suitably 0-30wt%, preferably 0-20wt%, more preferably 0-10wt%, especially 0-5wt%) of filler means.

Said polymeric material may include:

(i) 70-100wt% of said first polymer, preferably a polymer of formula (XX) referred to above.
(ii) 0-30wt% of said second polymer;
(iii) 0-20wt% of filler means;
(iv) 0-10wt% of other additives which may be selected, for example, from other polymers, processing aids, colours.

Suitably, said polymeric material includes at least 80wt%, preferably at least 90wt%, more preferably at least 95wt%, especially at least 99wt% of said first polymer especially a polymer of formula (XX) referred to above.

According to a second aspect of the invention, there is provided a method of fitting a selected component within a receiver, wherein said selected component is too large for it to be fitted in its intended position within the receiver, wherein said selected component comprises a polymeric material which comprises a first polymer comprising moieties I, II and/or III as described above, said method comprising:

(a) compressing the selected component thereby to produce a compressed component;
(b) arranging the compressed component in its intended position within the receiver;
(c) subjecting the compressed component to conditions whereby the compressed component expands.

The first polymer of the second aspect may have any feature of the first polymer of the first aspect mutatis mutandis.

The polymeric material of the second aspect may have any feature of the polymeric material of the first aspect mutatis mutandis.

Steps (a), (b) and/or (c) of the second aspect may have any feature of steps (a), (b) and/or (c) of the first aspect mutatis mutandis.

Said first polymer of the second aspect is preferably of formula (XX). Preferably, it comprises polyetheretherketone.

According to a third aspect of the invention, there is provided an assembly comprising a selected component as described in the first or second aspects fitted in its intended position in a receiver as described in the first or second aspects.

According to a fourth aspect of the invention, there is provided a compressed component made in a method described herein per se.

A compressed component, for example pipe, may be distinguished from a component such as an extruded (but not compressed) pipe using one or more of the following techniques:

- Visual observation of external marking on the component;

- Annealing a sample. The swaging process will produce some axial extension as well as the radial contraction. Generally one would expect an extruded pipe to shrink axially and radially on annealing (at or above the Tg) due to the residual stress from the extrusion process. In the case of a swaged pipe, it would shrink a little axially but expand radially even if the yield point had been exceeded during the swaging process. The fact that the reduced dimensions are frozen in below the Tg means that assessment could be made by this technique;

- Raman Spectroscopy may be used to analyse the surfaces (external and internal) to determine the stress state of the polymer in the component.

The invention extends to a compressed component which comprises a first polymer as described herein. The compressed component is preferably in the form of a pipe, preferably comprising a polymer of formula XX referred to.

The invention further extends to an assembly comprising a compressed component on a carrier. The compressed component is preferably a pipe and said assembly suitably comprises said pipe wrapped round the carrier. The carrier may be a spool and the pipe may be coiled round the spool. The pipe may have a length of at least 5m, preferably at least 10m, more preferably at least 20m, especially at least 50m. The length may be less than 500m.

When A is also described a method of making an assembly which includes winding a compressed component as described above and/or when made in the method described around a carrier, for example a spool.

Any feature of any aspect of any invention or embodiment described herein may be combined with any feature of any aspect of any other invention or embodiment described herein mutatis mutandis.

Specific embodiments will now be described by way of example, with reference to the accompanying drawings in which:

Figure 1 is a schematic diagram illustrating, partly in cross-section, apparatus in use for swaging (or reducing the diameter of) a pipe.

The following is referred to hereinafter: VICTREX PEEK polymer - refers to polyetheretherketone obtained from Victrex P1c of Thornton Cleveleys, UK.

The Glass Transition temperature (Tg) of polymers described herein may be measured according to the following Procedure 1.

Procedure 1

The Glass Transition Temperatures (Tg) of polymers may be determined by Differential Scanning Calorimetry (DSC) examining a 10mg plus or minus 10 microgram powder sample of the polymer in a TA-Instruments DSC Q100 under nitrogen at a flow rate of 40ml/min.

The scan procedure is:

Step 1 Perform and record a preliminary thermal cycle by heating the sample from 30°C to 450°C at 20°C/min to erase previous thermal history
Step 2 Hold for 2 mins
Step 3 Cool at 10°C/min to 30°C and hold for 5 mins.
Step 4 Heat from 30°C to 450°C at 20°C/min, recording the Tg.

From the resulting curve the onset of the Tg was obtained as the intersection of lines drawn along the pretransition baseline and a line drawn along the greatest slope obtained during the transition.

Embodiments of the present invention will now be described.

In general terms, an hollow component made from polyetheretherketone may be reduced in size in order that it may be fitted in an opening and, subsequently, the component may be caused to expand so that it fills the opening and/or abuts walls which define the opening. Thus, the component can be fitted and secured within an opening which it otherwise could not easily be fitted within.

A long length of pipe made from VICTREX PEEK polymer by extrusion may have its outer diameter reduced so that it can be fitted within a receiver pipe (not shown). Referring to Figure 1, a part of a liner pipe 2 made from VICTREX PEEK polymer is shown during its passage through an apparatus for swaging (or reducing the diameter of) the pipe. The liner pipe 2 has an external diameter A prior to passage through a die 4 and an outside diameter C after passage through the die 4.

The die 4 is held in position by means not shown. It tapers inwardly in the direction 5 of travel of the pipe 2 therethrough so as to define a relatively wide mouth for initially receiving the pipe 2, the mouth narrowing to define a minimum diameter B of the die. Upstream of the die 4 are a pair of contra-rotating feed rollers 6 and upstream are four idler rollers 8. The rollers 8 support the pipe 2 as it is conveyed by the feed rollers 6 to the die 4. Upstream of the idler rollers may be a very long length of pipe (not shown) which may be carried on a spool (or the like). Downstream of the die 4 are further rollers 10 for facilitating passage of the pipe through the die 4. In use, the pipe 2 is gradually unwound from the spool and forced through the die 4 whereupon its diameter is reduced to diameter B. After it emerges from the die the pipe has a diameter C. Diameters B and C are approximately equal, although C may be slightly greater than diameter B if the pipe relaxes slightly after passing through the die. In any event diameter C is less than diameter A, for example by about 10%.

The pipe 2 need not be subjected to an external heating means prior to or during passage through the die and need not be subjected to a cooling means after passage through the die. Thus, treatment of the pipe may be undertaken at ambient temperature.

The glass transition temperature of VICTREX PEEK polymer is 143°C. Provided the reduced diameter pipe produced as described is not heated to a temperature approaching the glass transition temperature and provided the pipe is not subjected to a significant internal pressure, the pipe will remain at its reduced diameter C substantially indefinitely and certainly for days and weeks after its production. A reduced diameter pipe may therefore be manufactured at a factory and it may be wound on a spool or other carrier prior to being transported to a place wherein it may be used.

The reduced diameter pipe may be used to line another pipe for example a worn or corroded metal pipe which may be a fluid supply pipe in a chemical plant or a mains gas pipe or the like. In use, a pipe to be lined (referred to hereinafter as a "receiver pipe") may have an internal diameter of about A - that is, the internal diameter of the receiver pipe may be approximately the same as the outside diameter A of pipe 2 before reduction by passage through die 4. Thus, prior to reduction, pipe 2 will not fit within the receiver pipe; after reduction, with the pipe 2 having an outside diameter C, it may be slid into the receiver pipe. This step is suitably undertaken at ambient temperature. When arranged within the receiver pipe there may be a slight gap between the outside wall of pipe 2 and the inside wall of the receiver pipe.

Once in position, the pipe 2 is caused to expand so its outer wall is urged against the inner wall of the receiver pipe so the pipe 2 becomes an interference fit within the receiver pipe. The means of expansion may be selected on a case by case basis which may depend on the conditions under which pipe 2 was compressed initially, its wall thickness

and diameter, the time available to complete the expansion and the availability of means for heating the pipe, for example from within. Different expansion processes may be as follows:

(i) When the pipe 2 was not compressed beyond its elastic limit (yield point) during swaging, expansion may be achieved by use only of heat. Thus, heat may be applied (in the absence of any means for pressurizing the pipe) to increase the temperature of the pipe to its Tg or above. At or about the Tg, the elastic frozen-in stress in the pipe is able to recover and the pipe will expand.

(ii) When permanent deformation of the pipe 2 occurred during its compression (i.e. when the yield stress of the VICTREX PEEK polymer was exceeded during compression), then heat and pressure may be used to cause expansion.

The pressure required may be given by equation

$$P = \frac{2SH}{D}$$

where:

P = estimated pressure to bring about expansion (Pa)
D = external diameter of the pipe (m)
H = wall thickness (m)
S = yield stress of the material at the temperature concerned (Pa)

As an example, the pressure required to expand a 100mm outside diameter polyetheretherketone pipe with a 5mm wall thickness would be:

- 12.5 MPa at room temperature
- 7 MPa at 100°C
- 4.5MPa at 150°C

A convenient means of applying heat and/or pressure to the liner pipe may be by use of a heated and/or pressurized fluid, (for example superheated steam) which may be input into the pipe. If only heat is required to achieve expansion of the liner pipe and wherein the receiver pipe is metal then the outside of the liner pipe may be heated by suitable means so heat is conducted to the liner pipe.

VICTREX PEEK polymer is a high performance thermoplastic material with excellent physical and chemical properties; however it is relatively costly. To reduce the cost of a liner pipe for use as described, whilst not sacrificing too much performance, the VICTREX PEEK polymer may be blended with other materials, for example other cheaper thermoplastics materials. VICTREX PEEK polymer may be blended with up to 30wt% of a second polymer which is immiscible therewith (such as polyethersulphone e.g. Ultrason E3010 (Ex Basf). The blended material will comprise a matrix of VICTREX PEEK polymer with the second polymer dispersed as small particles therein. Since the VICTREX PEEK polymer forms the matrix, the properties of the blend, such as Tg and other physical properties enabling it to be compressed and to expand as described herein will be similar to that of the matrix polymer.

Alternatively, VICTREX PEEK polymer could be blended with up to 30wt% of another polymer (such as a polyetherimide as described in US5110880) which forms a miscible blend with it. In this case, the blend may have properties such as Tg intermediate those of the components of the blend. This may provide a means of increasing the resistance of the polymeric material to expansion after compression. It may be of utility if the liner pipe (or any other compressed component) is to be introduced into a high temperature (or pressure) environment when in its reduced state. The additional resistance to expansion may allow expansion to be delayed until the liner pipe (or other compound) is safely fitted in position.

## Claims

**1.** A method of fitting a component in a receiver, the method comprising:

a) compressing a selected component thereby to produce a compressed component, wherein said selected component comprises a polymeric material and said polymeric material comprises a first polymer having a glass transition temperature (Tg) of at least 100°C; or
(a*) selecting a compressed component which comprises a polymeric material wherein said polymeric material comprises a first polymer having a glass transition temperature (Tg) of at least 100°C;
wherein said first polymer is a homopolymer having a repeat unit of general formula

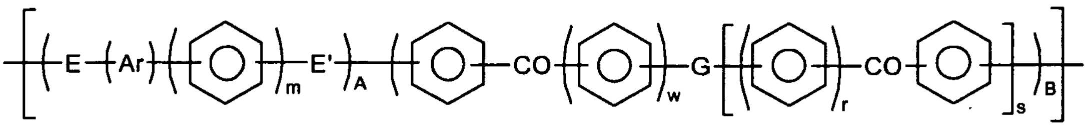

IV

or a homopolymer having a repeat unit of general formula

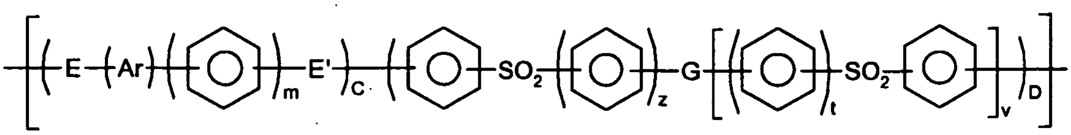

V

or a random or block copolymer of at least two different units of IV and/or V; or
said first polymer is a homopolymer having a repeat unit of general formula

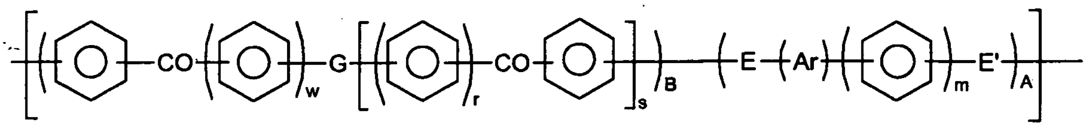

IV*

or is a homopolymer having a repeat unit of general formula

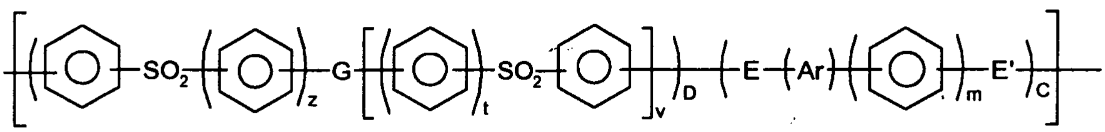

V*

or a random or block copolymer of at least two different units of IV* and/or V*;
wherein m, r, s, t, v, w, and z independently represent zero or a positive integer and, wherein A, B, C, and D independently represent 0 or 1, E and E' independently represent an oxygen or a sulphur atom or a direct link, G represents an oxygen or sulphur atom, a direct link or a -O-Ph-O- moiety where Ph represents a phenyl group and Ar is selected from one of the following moieties (vii) to (xiii) and (xi)**

(xi)** 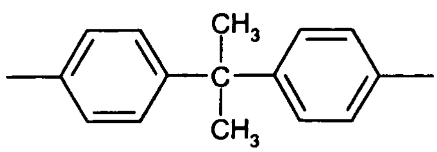

(vii) 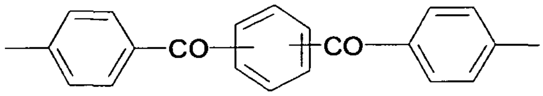

(viii) 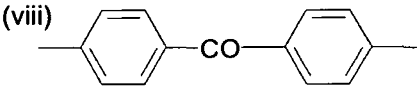

(ix) 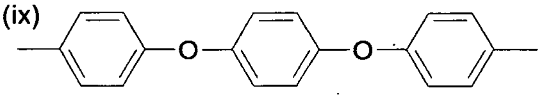

(x) 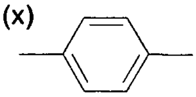

(xi) 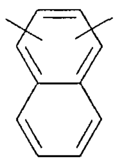

(xii) 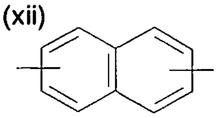

(xiii) 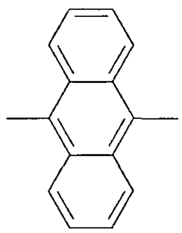

wherein either step (a) or step (a*) is in combination with the following steps:
(b) arranging the compressed component in position within the receiver; and
(c) subjecting the compressed component to conditions whereby the compressed component expands.

**2.** A method according to Claim 1, wherein said selected component or said compressed component comprise a pipe.

**3.** A method according to Claim 1 or Claim 2, wherein the ratio of the wall thickness to diameter of a pipe selected for compression is less than 0.06 and is at least 0.01.

**4.** A method according to any preceding claim, wherein with said selected component at a temperature which is at least 20°C less than the Tg of said first polymer, said selected component is subjected to a compression means to compress the component and produce said compressed component.

**5.** A method according to any preceding claim, wherein, after compression in step (a) and prior to step (b), said compressed component is subjected to a temperature of at least 10°C and less than 50°C.

**6.** A method according to any preceding claim, wherein between steps (a) and (b), no outside force is applied to said compressed component to restrict it from expanding.

**7.** A method according to any preceding claim, wherein during the entirety of step (b), the temperature of the compressed component does not rise about the Tg of said first polymer.

**8.** A method according to any preceding claim, wherein, in step (c), the compressed component is subjected to one or both of either an increase in temperature or application of pressure.

**9.** A method according to any preceding claim, wherein said compressed component is a pipe and the ratio of the outside diameter of the compressed pipe produced in step (a) to that of the expanded pipe in step (c) is at least 0.8.

**10.** A method according to any preceding claim, wherein said first polymer has a Tg of at least 120°C and of less then 260°C.

**11.** A method according to any preceding claim, wherein said first polymer comprising a repeat unit of formula (XX)

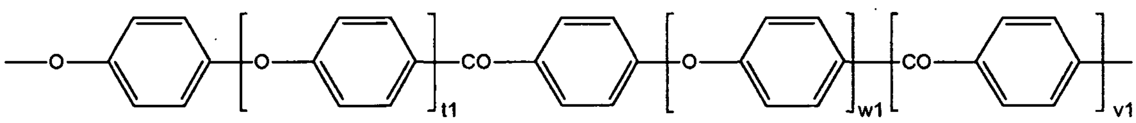

where t1, and w1 independently represent 0 or 1 and v1 represents 0, 1 or 2.

**12.** A method according to any preceding claim, wherein said first polymer is selected from polyetheretherketone, polyetherketone, polyetherketoneetherketoneketone and polyetherketoneketone.

**13.** A method according to any preceding claim, wherein said first polymer is polyetheretherketone.

**14.** A method according to any preceding claim, wherein said polymeric material is a blend of polymers which comprises said first polymer and a second polymer.

**15.** A method according to any preceding claim, wherein in step a) and a*) said compressed component is maintained in its compressed state due to intrinsic properties of said first polymer

**16.** A method according to any preceding claim, wherein between step (a) and (b) or step (a*) and (b), no tension or compression force is applied to the compressed component to restrict it from expanding.

**17.** A compressed component made in a method according to step (a) of any of claims 1 to 16, *per se.*

**18.** A compressed component according to claim 17, wherein said compressed component comprises a pipe.

**19.** An assembly comprising a compressed component according to claim 18 on a carrier.

**Patentansprüche**

**1.** Verfahren zum Einpassen einer Komponente in eine Aufnahme, wobei das Verfahren Folgendes umfasst:

(a) Komprimieren einer ausgewählten Komponente, um eine komprimierte Komponente zu erzeugen, wobei die ausgewählte Komponente ein Polymermaterial umfasst und das Polymermaterial ein erstes Polymer mit einer Glasübergangstemperatur (Tg) von wenigstens 100 °C umfasst; oder
(a*) Auswählen einer komprimierten Komponente, die ein Polymermaterial umfasst, wobei das Polymermaterial ein erstes Polymer mit einer Glasübergangstemperatur (Tg) von wenigstens 100 °C umfasst;
wobei das erste Polymer ein Homopolymer mit einer Wiederholungseinheit der allgemeinen Formel

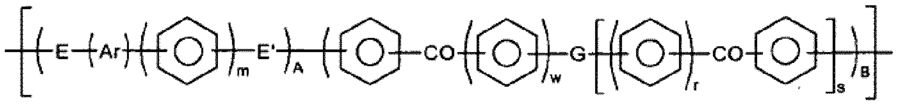 IV

oder ein Homopolymer mit einer Wiederholungseinheit der allgemeinen Formel

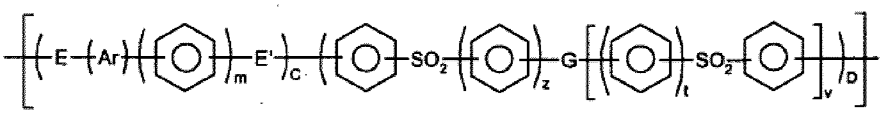 V

oder ein Zufalls- oder Blockcopolymer von wenigstens zwei verschiedenen Einheiten von IV und/oder V ist; oder das erste Polymer ein Homopolymer mit einer Wiederholungseinheit der allgemeinen Formel

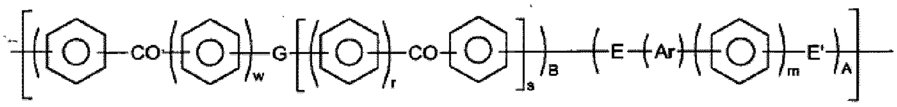 IV*

oder ein Homopolymer mit einer Wiederholungseinheit der allgemeinen Formel

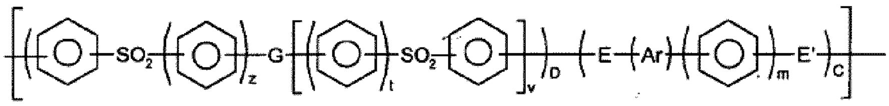 V*

oder ein Zufalls- oder Blockcopolymer von wenigstens zwei verschiedenen Einheiten von IV* und/oder V* ist; wobei m, r, s, t, v, w und z unabhängig null oder eine positive ganze Zahl darstellen, und wobei A, B, C und D unabhängig 0 oder 1 darstellen, E und E' unabhängig ein Sauerstoff- oder ein Schwefelatom oder eine direkte Bindung darstellen, G ein Sauerstoff- oder Schwefelatom, eine direkte Bindung oder eine -O-Ph-O-Einheit darstellt, wobei Ph eine Phenylgruppe darstellt, und Ar ausgewählt ist aus einer der folgenden Einheiten (vii) bis (xiii) und (xi)**

(xi)** 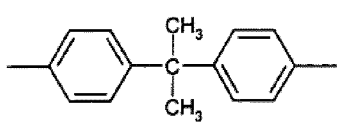

(vii) 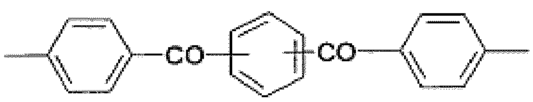

(viii)
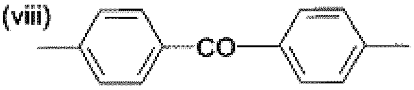

(ix)
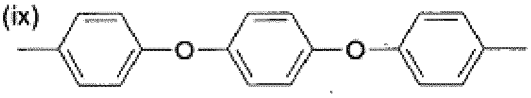

(x)
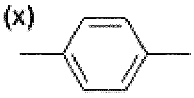

(xi)
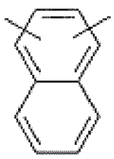

(xii)
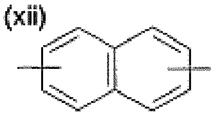

(xiii)
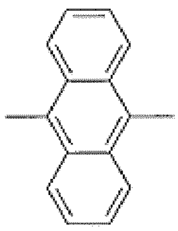

wobei entweder Schritt (a) oder Schritt (a*) in Kombination mit folgenden Schritten stattfindet:

(b) Anordnen der komprimierten Komponente in Position in der Aufnahme; und

(c) Unterwerfen der komprimierten Komponente Bedingungen, wodurch die komprimierte Komponente expandiert.

**2.** Verfahren gemäß Anspruch 1, wobei die ausgewählte Komponente oder die komprimierte Komponente ein Rohr umfasst.

**3.** Verfahren gemäß Anspruch 1 oder Anspruch 2, wobei das Verhältnis von Wanddicke zu Durchmesser eines für die Kompression ausgewählten Rohrs weniger als 0,06 und wenigstens 0,01 beträgt.

**4.** Verfahren gemäß einem der vorstehenden Ansprüche, wobei bezüglich der ausgewählten Komponente die ausgewählte Komponente bei einer Temperatur, die wenigstens 20 °C kleiner als die Tg des ersten Polymers ist, einem Kompressionsmittel unterworfen wird, um die Komponente zu komprimieren und die komprimierte Komponente zu erzeugen.

**5.** Verfahren gemäß einem der vorstehenden Ansprüche, wobei nach der Kompression bei Schritt (a) und vor Schritt (b) die komprimierte Komponente einer Temperatur von wenigstens 10 °C und weniger als 50 °C ausgesetzt wird.

**6.** Verfahren gemäß einem der vorstehenden Ansprüche, wobei zwischen den Schritten (a) und (b) keine äußere Kraft an die komprimierte Komponente angelegt wird, um sie beim Expandieren zu beschränken.

**7.** Verfahren gemäß einem der vorstehenden Ansprüche, wobei während des gesamten Schrittes (b) die Temperatur

der komprimierten Komponente die Tg des ersten Polymers nicht übersteigt.

**8.** Verfahren gemäß einem der vorstehenden Ansprüche, wobei bei Schritt (c) die komprimierte Komponente einer Erhöhung der Temperatur und/oder der Anwendung von Druck ausgesetzt wird.

**9.** Verfahren gemäß einem der vorstehenden Ansprüche, wobei die komprimierte Komponente ein Rohr ist und das Verhältnis des Außendurchmessers des bei Schritt (a) hergestellten komprimierten Rohrs zu jenem des expandierten Rohrs von Schritt (c) wenigstens 0,8 beträgt.

**10.** Verfahren gemäß einem der vorstehenden Ansprüche, wobei das erste Polymer eine Tg von wenigstens 120 °C und weniger als 260 °C aufweist.

**11.** Verfahren gemäß einem der vorstehenden Ansprüche, wobei das erste Polymer eine Wiederholungseinheit der Formel (XX) umfasst,

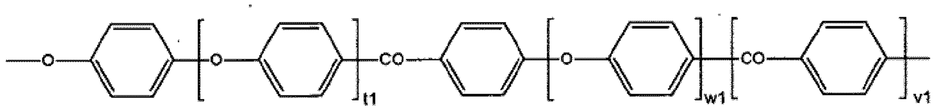

wobei t1 und w1 unabhängig 0 oder 1 darstellen und v1 0, 1 oder 2 darstellt.

**12.** Verfahren gemäß einem der vorstehenden Ansprüche, wobei das erste Polymer ausgewählt ist aus Polyetheretherketon, Polyetherketon, Polyetherketonetherketonketon und Polyetherketonketon.

**13.** Verfahren gemäß einem der vorstehenden Ansprüche, wobei das erste Polymer Polyetheretherketon ist.

**14.** Verfahren gemäß einem der vorstehenden Ansprüche, wobei das Polymermaterial ein Gemisch von Polymeren ist, welches das erste Polymer und ein zweites Polymer umfasst.

**15.** Verfahren gemäß einem der vorstehenden Ansprüche, wobei bei Schritt a) und a*) die komprimierte Komponente durch die inhärenten Eigenschaften des ersten Polymers in ihrem komprimierten Zustand gehalten wird.

**16.** Verfahren gemäß einem der vorstehenden Ansprüche, wobei zwischen Schritt (a) und (b) oder Schritt (a*) und (b) keine Spannung oder Kompressionskraft an die komprimierte Komponente angelegt wird, um sie beim Expandieren zu beschränken.

**17.** Komprimierte Komponente, hergestellt bei einem Verfahren gemäß Schritt (a) gemäß einem der Ansprüche 1 bis 16, *per se.*

**18.** Komprimierte Komponente gemäß Anspruch 17, wobei die komprimierte Komponente ein Rohr umfasst.

**19.** Baugruppe, umfassend eine komprimierte Komponente gemäß Anspruch 18 auf einem Träger.

**Revendications**

**1.** Procédé d'ajustement d'un composant dans un réceptacle, le procédé comprenant :

a) la compression d'un composant choisi pour obtenir un composant comprimé, ledit composant choisi comprenant une matière polymère et ladite matière polymère comprenant un premier polymère de température de transition vitreuse (Tg) au moins égale à 100 °C ; ou
(a*) la sélection d'un composant comprimé qui comprend une matière polymère, ladite matière polymère comprenant un premier polymère de température de transition vitreuse (Tg) au moins égale à 100 °C ;
ledit premier polymère étant un homopolymère dont le motif de répétition répond à la formule générale

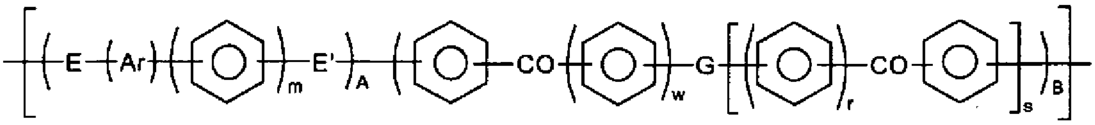 IV

ou un homopolymère dont le motif de répétition répond à la formule générale

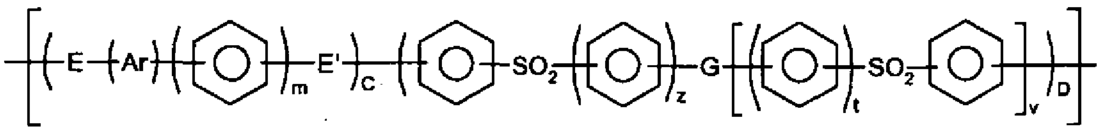 V

ou un copolymère aléatoire ou bloc constitué d'au moins deux motifs différents correspondant à IV et/ou V ; ou ledit premier polymère étant un homopolymère dont le motif de répétition répond à la formule générale

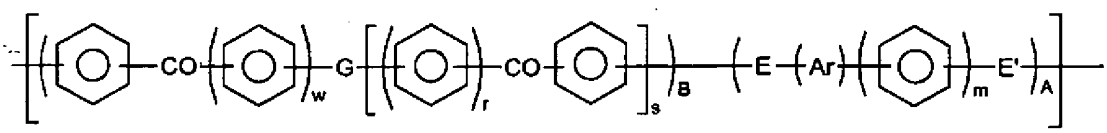 IV*

ou étant un homopolymère dont le motif de répétition répond à la formule générale

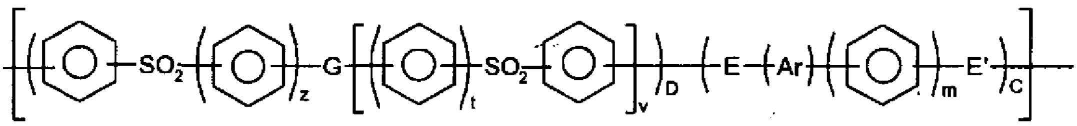 V*

ou un copolymère aléatoire ou bloc constitué d'au moins deux motifs différents correspondant à IV* et/ou V* ; où m, r, s, t, v, w et z sont indépendamment égaux à zéro ou à un entier positif, et où A, B, C et D sont indépendamment égaux à 0 ou 1, E et E' représentent indépendamment un atome d'oxygène ou de soufre ou une liaison directe, G représente un atome d'oxygène ou de soufre, une liaison directe ou un groupement -0-Ph-O- où Ph représente un groupement phényle et Ar est choisi parmi l'un des groupements (vii) à (xiii) et (xi)** suivants

(xi)** 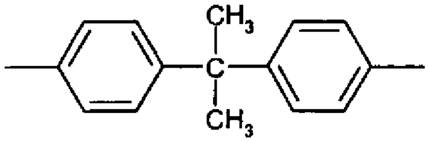

(vii) 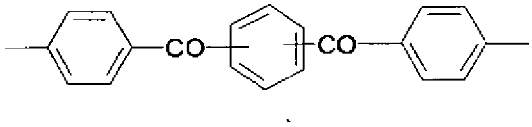

(viii) 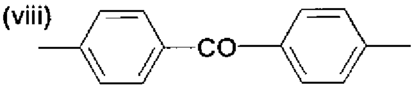

(ix) 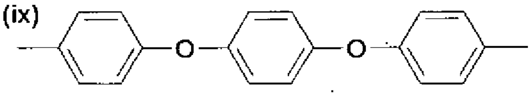

(x) 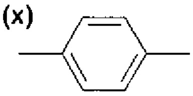

(xi) 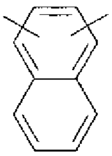

(xii) 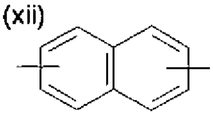

(xiii) 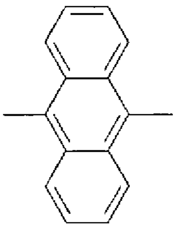

l'étape (a) ou l'étape (a*) étant combinée aux étapes suivantes :

(b) la disposition du composant comprimé en position à l'intérieur du réceptacle ; et

(c) la soumission du composant comprimé à des conditions dans lesquelles le composant comprimé se dilate.

**2.** Procédé conforme à la revendication 1, où ledit composant choisi ou ledit composant comprimé comprend un tuyau.

**3.** Procédé conforme à la revendication 1 ou à la revendication 2, où le rapport de l'épaisseur des parois sur le diamètre d'un tuyau choisi pour la compression est inférieur à 0,06 et au moins égal à 0,01.

**4.** Procédé conforme à l'une quelconque des revendications précédentes, où avec ledit composant choisi à une température inférieure d'au moins 20 °C à la Tg dudit premier polymère, ledit composant choisi est soumis à un moyen de compression permettant de comprimer le composant et d'obtenir ledit composant comprimé.

**5.** Procédé conforme à l'une quelconque des revendications précédentes, où, après la compression de l'étape (a) et avant l'étape (b), ledit composant comprimé est soumis à une température d'au moins 10 °C et inférieure à 50 °C.

**6.** Procédé conforme à l'une quelconque des revendications précédentes, où entre les étapes (a) et (b), aucune force extérieure n'est appliquée audit composant comprimé pour l'empêcher de se dilater.

**7.** Procédé conforme à l'une quelconque des revendications précédentes, où pendant la totalité de l'étape (b), la température du composant comprimé n'augmente pas jusqu'à une valeur approximativement égale à la Tg dudit premier polymère.

**8.** Procédé conforme à l'une quelconque des revendications précédentes, où, dans l'étape (c), le composant comprimé est soumis à au moins l'un des phénomènes choisis parmi une augmentation de température ou une application

de pression.

**9.** Procédé conforme à l'une quelconque des revendications précédentes, où ledit composant comprimé est un tuyau et le rapport du diamètre extérieur du tuyau comprimé obtenu dans l'étape (a) sur celui du tuyau dilaté de l'étape (c) est au moins égal à 0,8.

**10.** Procédé conforme à l'une quelconque des revendications précédentes, où ledit premier polymère présente une Tg d'au moins 120 °C et inférieure à 260 °C.

**11.** Procédé conforme à l'une quelconque des revendications précédentes, où ledit premier polymère comprend un motif de répétition de formule (XX)

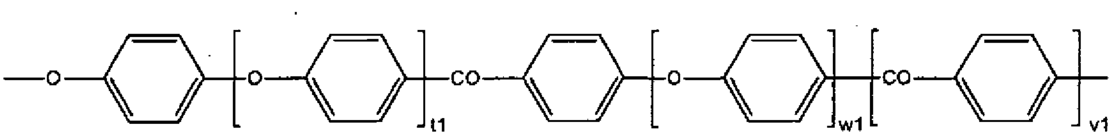

où t1 et w1 sont indépendamment égaux à 0 ou 1 et v1 est égal à 0, 1 ou 2.

**12.** Procédé conforme à l'une quelconque des revendications précédentes, où ledit premier polymère est choisi parmi la polyétheréthercétone, la polyéthercétone, la polyéthercétoneéthercétonecétone et la polyéthercétonecétone.

**13.** Procédé conforme à l'une quelconque des revendications précédentes, où ledit premier polymère est la polyétheréthercétone.

**14.** Procédé conforme à l'une quelconque des revendications précédentes, où ladite matière polymère est un mélange de polymères comprenant ledit premier polymère et un second polymère.

**15.** Procédé conforme à l'une quelconque des revendications précédentes, où dans les étapes a) et a*), ledit composant comprimé est conservé dans son état comprimé du fait des propriétés intrinsèques dudit premier polymère.

**16.** Procédé conforme à l'une quelconque des revendications précédentes, où entre les étapes (a) et (b) ou les étapes (a*) et (b), aucune force de tension ou de compression n'est appliquée au composant comprimé pour l'empêcher de se dilater.

**17.** Composant comprimé fabriqué selon un procédé lui-même conforme à l'étape (a) de l'une quelconque des revendications 1 à 16.

**18.** Composant comprimé conforme à la revendication 17, où ledit composant comprimé comprend un tuyau.

**19.** Bloc comprenant un composant comprimé conforme à la revendication 18 disposé sur un vecteur.

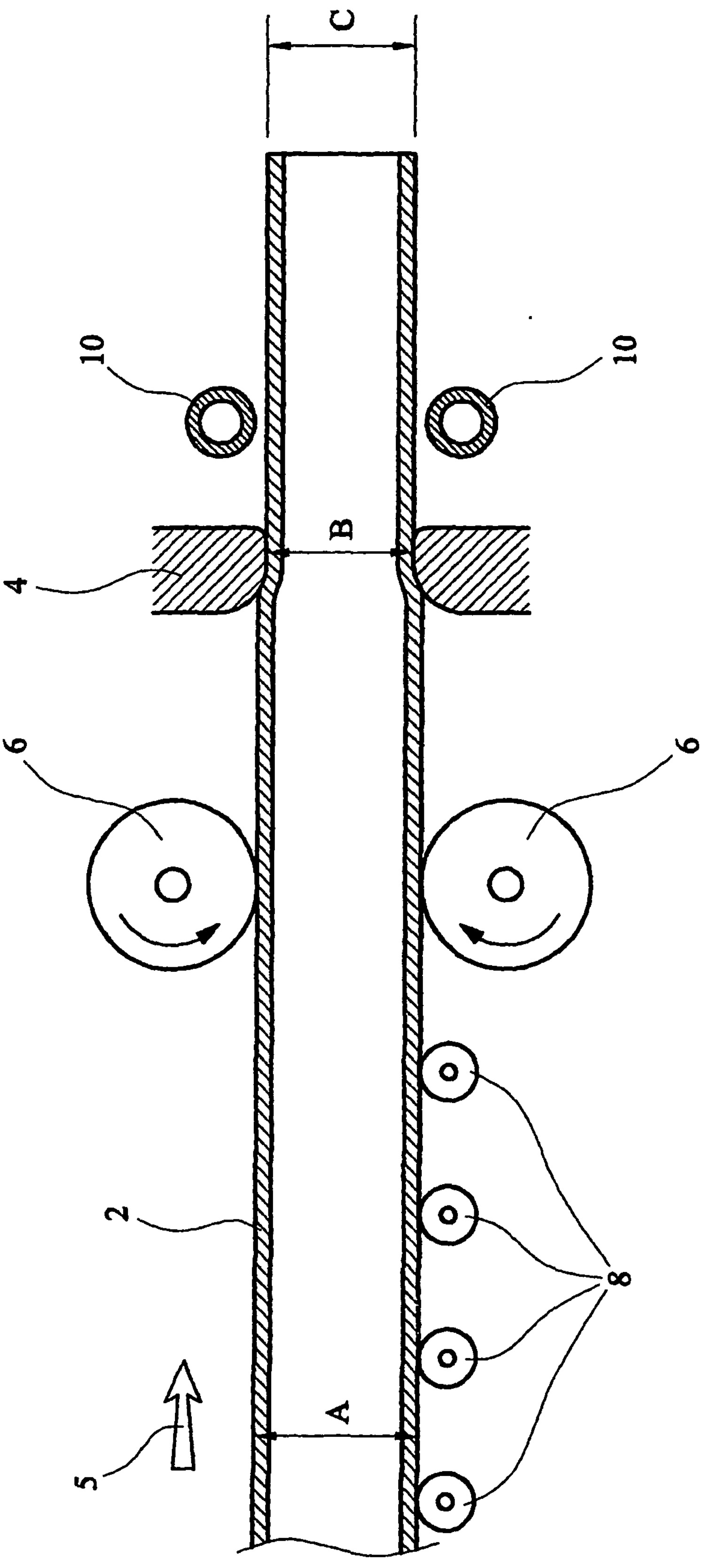


FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 807413 A, Tubovit
- WO 200214404 A
- EP 211604 A
- US 4895913 A
- US 4624997 A
- US 5110880 A